(19) Europäisches Patentamt / European Patent Office / Office européen des brevets

(11) **EP 2 869 592 A1**

(12) **EUROPEAN PATENT APPLICATION**
published in accordance with Art. 153(4) EPC

(43) Date of publication:
06.05.2015 Bulletin 2015/19

(51) Int Cl.:
*H04R 1/02* (2006.01)    *H04M 1/03* (2006.01)

(21) Application number: 12879976.4

(22) Date of filing: 26.12.2012

(86) International application number:
PCT/JP2012/008295

(87) International publication number:
WO 2014/002156 (03.01.2014 Gazette 2014/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.06.2012 JP 2012145378

(71) Applicant: NEC CASIO Mobile Communications,
Ltd.
Kawasaki-shi, Kanagawa 211-8666 (JP)

(72) Inventors:
• ONISHI, Yasuharu
  Kanagawa 2118666 (JP)
• MURATA, Yukio
  Kanagawa 2118666 (JP)
• KISHINAMI, Yuichiro
  Kanagawa 2118666 (JP)
• KOMODA, Motoyoshi
  Kanagawa 2118666 (JP)

(74) Representative: Vossius & Partner
Patentanwälte Rechtsanwälte mbB
Siebertstrasse 3
81675 München (DE)

(54) **MOUNTING STRUCTURE FOR ELECTROACOUSTIC TRANSDUCER AND ELECTRONIC APPARATUS TO WHICH ELECTROACOUSTIC TRANSDUCER HAS BEEN MOUNTED**

(57) To provide an electronic device and a mounting structure in which an electroacoustic transducer is mounted capable of sufficiently suppressing vibration of the electroacoustic transducer itself. A mounting structure (200) in which a speaker (4) is mounted includes a speaker (4), and a damping member (5) held between the speaker (4) and an electronic device (3) on which the speaker (4) is mounted. A surface of the speaker frame (41) on a side of the electronic device (3) includes a first uneven part (41A), at least a part of the first uneven part (41A) being processed to have convexes and concaves, and a surface of the damping member (5) on a side of the speaker (4) includes a second uneven part (5A), a part of the second uneven part (5A) being processed to have convex and concaves to fit the first uneven part (41A) of the speaker frame (41).

Fig. 3                                    200

EP 2 869 592 A1

**Description**

**Technical Field**

The present invention relates to a mounting structure in which an electroacoustic transducer is mounted and an electronic device on which the electroacoustic transducer is mounted by means of the mounting structure.

**Background Art**

In the technical field of mobile telephones, development of thin and stylish mobile telephones having acoustic functions which enhances the commercial value thereof has been actively carried out. The acoustic functions include, for example, a music reproduction function and a hands-free earphone microphone function.

In the technical field of mobile telephones, in particular, a decrease in the thickness of a housing thereof has been promoted, and thus the housing tends to become less rigid.

Further, amusement functions of mobile telephones such as video replay have been enhanced. Therefore, regarding the acoustic function, it is required to enhance the sound quality and to increase the volume. It is therefore indispensable to mount a speaker having high power on a mobile telephone.

Because of such a development background, in the technical field of mobile telephones, there is a strong demand for suppression of vibration of the housing when a speaker emits a sound.

In normal mobile telephones, a speaker is directly mounted on a housing of a mobile telephone. Accordingly, vibration of the speaker itself occurring when the speaker emits a sound is directly transferred to the housing, which causes vibration of the housing.

Since the area of the housing is larger than that of the speaker, a large sound pressure is emitted even from a slight amount of vibration. Accordingly, the vibration of the housing and sound waves generated from the speaker interfere with each other, which greatly deteriorates the acoustic characteristics of the mobile telephone.

One known method to suppress the vibration of the housing is to increase the rigidity of the housing where a stress is concentrated when the housing is vibrated. Specifically, according to this method, the thickness of the part of the housing where a stress is concentrated is increased or a reinforcing member is arranged in the housing. According to this method, the thickness of the mobile telephone itself increases, which affects the design thereof. This method is therefore not preferable.

Another method of reducing an input voltage to the speaker in the vicinity of a fundamental resonance frequency of the housing is also known. This method affects, however, the acoustic characteristics of the speaker and thus is not preferable.

Patent literature 1 discloses forming a speaker frame using a vibration damping metal plate having thermosetting acrylic resin held between two steel plates, thereby suppressing the vibration of the speaker frame itself.

Patent literature 2 discloses providing a vibration damping laminated sheet between a speaker frame and a speaker cabinet, the vibration damping laminated sheet including vibration damping resin between two steel plates, thereby preventing transmission of vibration from the speaker frame to the speaker cabinet.

Patent literature 3 discloses, as a vibration damping material, a laminated body including at least one polymer visco-elastic layer and at least one plate made of a rigid body.

Patent literature 4 discloses attaching a speaker device to a vehicle body panel through a skin material in which a plurality of cutouts are provided, thereby preventing transmission of vibration from the speaker device to the vehicle body panel.

Citation List

Patent Literature

Patent literature 1: Japanese Unexamined Patent Application Publication No. 2-195800
Patent literature 2: Japanese Unexamined Patent Application Publication No. 2-226900
Patent literature 3: Japanese Unexamined Patent Application Publication No. 3-047750
Patent literature 4: Japanese Unexamined Utility Model Application Publication No. 5-000552

Summary of Invention

Technical Problem

Patent literature 2 to 4 do not suppress vibration of the speaker itself. Further, as the vibration damping metal plate disclosed in Patent literature 1 is nothing more than the two steel plates with thermosetting acrylic resin held therebetween, it does not carry out sufficient vibration damping.

Solution to Problem

A mounting structure in which an electroacoustic transducer is mounted according to a first exemplary aspect of the present invention includes an electroacoustic transducer and a damping member. The damping member is held between the electroacoustic transducer and a mounting device on which the electroacoustic transducer is mounted. A surface of a housing of the electroacoustic transducer on a side of the mounting device includes a first uneven part, at least a part of the first uneven part being processed to have convexes and concaves. A surface of the damping member on a side of the electroacoustic transducer includes a second uneven part, at least a part of the second uneven part being processed to have convexes and concaves to fit the first uneven part of the housing of the electroacoustic transducer.

A mounting structure in which an electroacoustic transducer is mounted according to a second exemplary aspect of the present invention includes an electroacoustic transducer and a vibration damping member. The vibration damping member is held between the acoustic transducer and a mounting device on which the electroacoustic transducer is mounted. The vibration damping member includes a metallic member arranged on a side of the electroacoustic transducer and a damping member arranged on a side of the mounting device. A surface of the metallic member on a side of the mounting device includes a first uneven part, at least a part of the first uneven part being processed to have convexes and concaves. A surface of the damping member on a side of the electroacoustic transducer includes a second uneven part, a part of the second uneven part being processed to have convexes and concaves to fit the first uneven part of the metallic member.

An electronic device according to a third exemplary aspect of the present invention includes the electroacoustic transducer mounted thereon by means of the mounting structure according to the first exemplary aspect or the second exemplary aspect.

**Advantageous Effects of Invention**

According to the present invention, it is possible to sufficiently suppress vibration of the electroacoustic transducer itself.

**Brief Description of Drawings**

Fig. 1 is a perspective view showing a mounting structure in which a speaker is mounted on an electronic device according to a first exemplary embodiment;

Fig. 2 is a side view showing a mounting structure in which the speaker is mounted on the electronic device according to the first exemplary embodiment;

Fig. 3 is a perspective view showing a mounting structure in which a speaker is mounted on an electronic device according to a second exemplary embodiment;

Fig. 4 is a side view showing a mounting structure in which the speaker is mounted on the electronic device according to the second exemplary embodiment;

Fig. 5 is a graph showing a comparison of acoustic characteristics between the mounting structure in which the speaker is mounted on the electronic device according to the first exemplary embodiment and a mounting structure in which a speaker is mounted on an electronic device according to a related art; and

Fig. 6 is a perspective view showing a mounting structure in which the speaker is mounted on the electronic device according to the related art.

**Description of Embodiments**

Hereinafter, exemplary embodiments of the present invention will be described. Note that the present invention is not limited to the following exemplary embodiments.

First exemplary embodiment

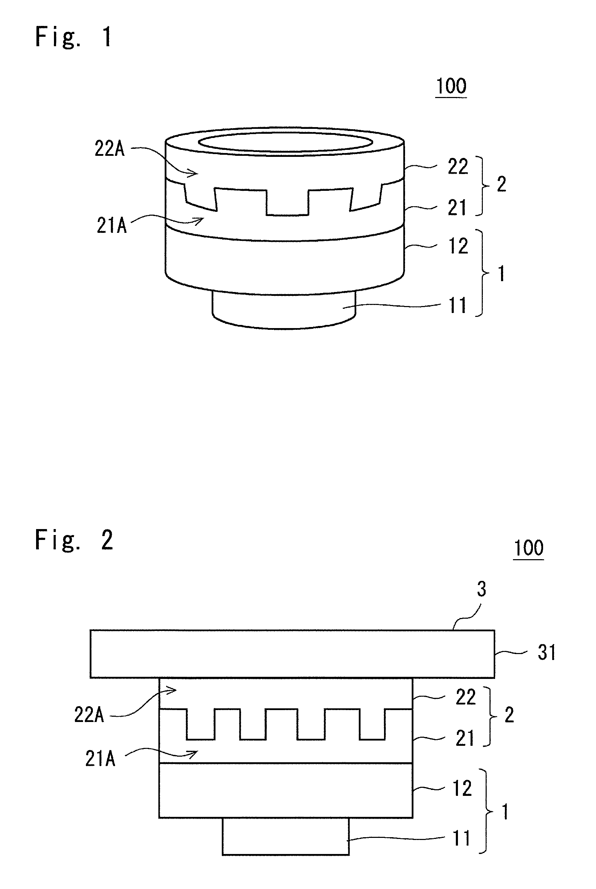

Fig. 1 shows a perspective view showing a mounting structure 100 in which a speaker (electroacoustic transducer) 1 is mounted on an electronic device 3 according to a first exemplary embodiment. Fig. 2 shows a side view of the mounting structure 100 in which the speaker 1 is mounted on the electronic device 3 according to the first exemplary embodiment.

As shown in Figs. 1 and 2, the mounting structure 100 in which the speaker 1 is mounted according to this exemplary embodiment includes a speaker 1, a vibration damping member 2 and the like. Further, the vibration damping member 2 is held between the speaker 1 and a housing 31 of the electronic device (mounting device) 3 on which the speaker 1 is mounted.

Further, a sound hole (not shown) that releases a sound emitted from the speaker 1 to outside of the electronic device 3 is provided in the housing 31.

The speaker 1 includes a permanent magnet 11, a speaker frame 12 and the like.

Further, the permanent magnet 11 is accommodated in the speaker frame 12.

The vibration damping member 2 includes a substantially plate-like metallic member 21 arranged on the side of the speaker 1, a substantially plate-like damping member 22 arranged on the side of the housing 31 of the electronic device 3 and the like.

The metallic member 21 and the damping member 22 are joined so as to form a laminated structure.

More specifically, the metallic member 21 is made of a metallic material such as stainless or brass formed to have a substantially plate-like shape. Further, the surface of the metallic member 21 on the side of the housing 31 includes a first uneven part 21 A, at least a part of the first uneven part 21A being processed to have convexes and concaves. In summary, the surface of the metallic member 21 on the side of the damping member 22 includes the first uneven part 21A in at least a part thereof.

Further, the damping member 22 is made of a resin material such as urethane or nitrile rubber formed to have a substantially plate-like shape. Further, the surface of the damping member 22 on the side of the speaker frame 12 includes a second uneven part 22A, at least a part of the second uneven part 22A being processed to have convexes and concaves. In short, the surface of the damping member 22 on the side of the metallic member 21 includes the second uneven part 22A in at least a part thereof.

The metallic member 21 and the damping member 22 are joined so that the first uneven part 21A of the metallic member 21 fits the second uneven part 22A of the damping member 22. In this way, the metallic member 21 and the damping member 22 are joined so as to form a laminated structure.

The speaker frame 12 and the vibration damping member 2 are joined and the vibration damping member 2 and the housing 31 of the electronic device 3 are joined. In this way, the speaker 1 is mounted on the electronic device 3.

More specifically, the surface of the speaker frame 12 opposite from the permanent magnet 11 and the surface of the metallic member 21 opposite from the damping member 22 are joined.

Further, the surface of the damping member 22 opposite from the metallic member 21 and the housing 31 of the electronic device 3 are joined.

In the mounting structure 100, the metallic member 21 functions as a base of the damping member 22. In other words, the metallic member 21 functions as a rigid base of the damping member 22. Due to this function, the metallic member 21 improves the vibration damping characteristics of the damping member 22.

Further, in the mounting structure 100, the damping member 22 is embedded in the concave parts of the first uneven part 21A of the metallic member 21. When the speaker 1 vibrates, a stress is concentrated in the parts of the damping member 22 embedded in the concave parts of the first uneven part 21A of the metallic member 21 (convex parts of the second uneven part 22A). The vibration energy of the speaker 1 can be absorbed at these parts of the damping member 22. Accordingly, the effect of damping the vibration of the vibration damping member 2 according to this exemplary embodiment is greater than that in a conventional vibration damping member in which a flat metallic member and a flat damping member are joined, and thus the acoustic characteristics of the speaker 1 mounted on the electronic device 3 are improved by the mounting structure 100.

Further, the elastic coefficient of the damping member 22 is equal to or less than 1/100 of that of the metallic member 21. It is thus possible to further improve the vibration damping effect of the vibration damping member 2.

With the mounting structure 100 according to the first exemplary embodiment of the present invention described above, a stress is concentrated in the parts of the damping member 22 embedded in the concave parts of the first uneven part 21A of the metallic member 21 when the speaker 1 vibrates (convex parts of the second uneven part 22A). It is therefore possible to absorb the vibration energy of the speaker 1 at these parts of the damping member 22. It is thus possible to sufficiently suppress the vibration of the speaker 1 itself.

Further, the metallic member 21 functions as a rigid base of the damping member 22. According to this function, the metallic member 21 is able to improve the vibration damping characteristics of the damping member 22.

Further, the elastic coefficient of the damping member 22 is equal to or less than 1/100 of that of the metallic member 21. Accordingly, it is possible to further improve the vibration damping effect of the vibration damping member 2.

With the mounting structure 100 according to the first exemplary embodiment of the present invention, it is possible to sufficiently suppress the vibration of the speaker 1 itself compared to conventional techniques. The vibration of the housing 31 can thus be suppressed, and therefore the acoustic characteristics of the electronic device 3 are improved. Further, it is possible to suppress the vibration of the housing 31 by only changing the mounting structure 100 in which the speaker 1 is mounted. It is thus possible to easily manufacture the electronic device 3 without increasing the thickness of the electronic device 3 and to reduce the cost.

Second exemplary embodiment

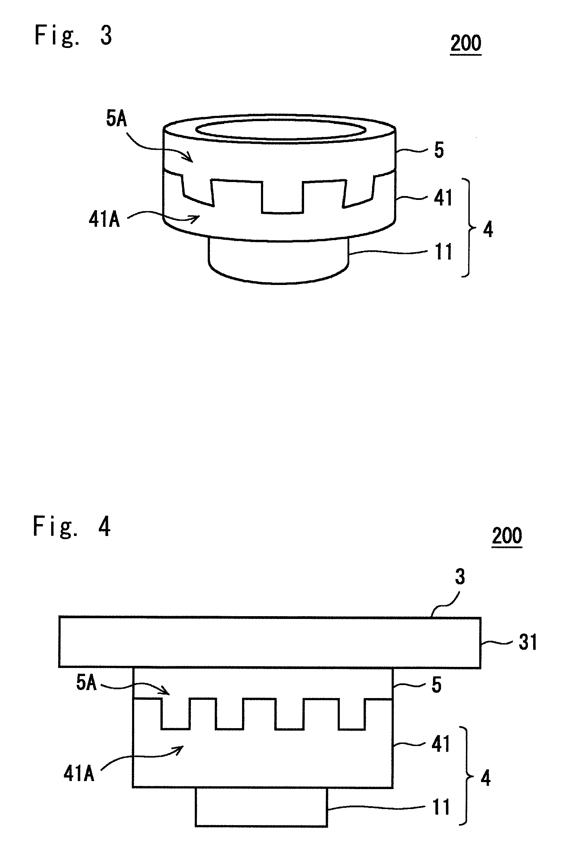

Fig. 3 shows a perspective view showing a mounting structure 200 in which a speaker (electroacoustic transducer) 4 is mounted on an electronic device 3 according to a second exemplary embodiment. Fig. 4 shows a side view showing the mounting structure 200 in which the speaker 4 is mounted on the electronic device 3 according to the second exemplary embodiment.

As shown in Figs. 3 and 4, the mounting structure 200 of the speaker 4 according to this exemplary embodiment is different from the mounting structure in the first exemplary embodiment in terms of the structure of a speaker frame 41. Further, in the mounting structure 200 of the speaker 4 according to this exemplary embodiment, the metallic member 21 is omitted and only a damping member 5 is included as a vibration damping member. Components of the second exemplary embodiment identical to those in the first exemplary embodiment are denoted by the same reference symbols, and the descriptions thereof will be omitted.

More specifically, the mounting structure 200 of the speaker 4 according to this exemplary embodiment includes a speaker 4, a damping member 5 and the like. The damping member 5 is held between the speaker 4 and the housing 31 of the electronic device (mounting device) 3 on which the speaker 4 is mounted.

Further, a sound hole (not shown) that releases a sound emitted from the speaker 4 to outside of the electronic device 3 is provided in the housing 31.

The speaker 4 includes a permanent magnet 11, a speaker frame 41 and the like.

Further, the permanent magnet 11 is accommodated in the speaker frame 41.

The speaker frame 41 is made of a metallic material such as stainless or brass. Further, the surface of the speaker frame 41 on the side of the housing 31 includes a first uneven part 41 A, at least a part of the first uneven part 41A being processed to have convexes and concaves. In summary, the surface of the speaker frame 41 on the side of the damping member 5 includes the first uneven part 41A in at least a part thereof.

The damping member 5 is made of a resin material such as urethane or nitrile rubber formed to have a substantially plate-like shape. Further, the surface of the damping member 5 on the side of the speaker frame 41 includes a second uneven part 5A, at least a part of the second uneven part 5A being processed to have convexes and concaves.

The speaker frame 41 and the damping member 5 are joined so that the first uneven part 41A of the speaker frame 41 fits the second uneven part 5A of the damping member 5. In this way, the speaker frame 41 and the damping member 5 are joined so as to form a laminated structure.

Further, the surface of the damping member 5 opposite from the speaker frame 41 and the housing 31 of the electronic device 3 are joined.

Further, the surface of the speaker frame 41 opposite from the permanent magnet 11 and the surface of the damping member 5 opposite from the housing 31 are joined.

In this way, the speaker frame 41 and the damping member 5 are joined and the damping member 5 and the housing 31 of the electronic device 3 are joined. In this way, the speaker 4 is mounted on the electronic device 3.

In the mounting structure 200, the damping member 5 is embedded in the concave parts of the first uneven part 41A of the speaker frame 41. When the speaker 4 vibrates, a stress is concentrated in the parts of the damping member 5 embedded in the concave parts of the first uneven part 41A of the speaker frame 41 (convex parts of the second uneven part 5A). The vibration energy of the speaker 4 can be absorbed at these parts of the damping member 5. Accordingly, the effect of damping the vibration of the damping member 5 according to this exemplary embodiment is greater than that in a conventional vibration damping member in which a flat metallic member and a flat damping member are joined, and the acoustic characteristics of the speaker 4 mounted on the electronic device 3 are improved by the mounting structure 200.

Further, the elastic coefficient of the damping member 5 is equal to or less than 1/100 of that of the speaker frame 41. It is thus possible to further improve the vibration damping effect of the damping member 5.

As a matter of course, with the mounting structure 200 according to the second exemplary embodiment of the present invention described above, the same effect as that in the first exemplary embodiment can be obtained. Furthermore, in the mounting structure 200 according to the second exemplary embodiment of the present invention, the metallic member 21 is omitted and only the damping member 5 is included as a vibration damping member. It is thus possible to manufacture the electronic device 3 to be slimmer and thus to reduce the cost thereof.

In the following description, acoustic characteristics of the mounting structure 100 in which the speaker 1 is mounted on the electronic device 3 according to the first exemplary embodiment and those of a mounting structure 300 in which a speaker 1 is mounted on an electronic device 3 according to a comparative example will be compared.

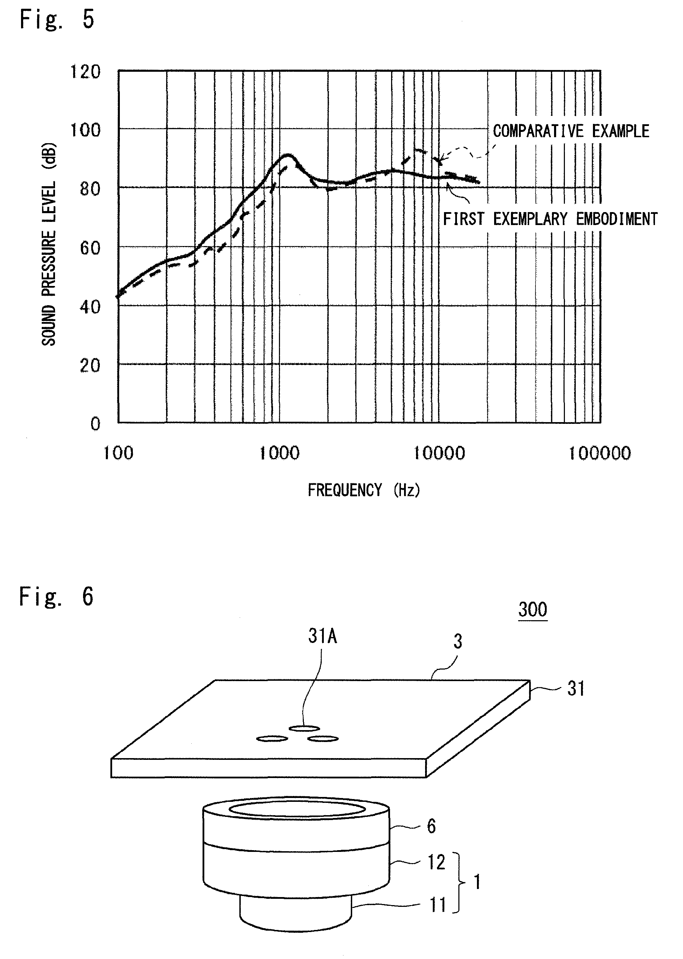

Fig. 5 is a graph showing a comparison of acoustic characteristics between the mounting structure 100 in which the speaker 1 is mounted on the electronic device 3 according to the first exemplary embodiment and the mounting structure 300 in which the speaker 1 is mounted on the electronic device 3 according to the comparative example.

The comparative example is one example of the mounting structure 300 in which the speaker 1 is mounted on the electronic device 3 according to a related art.

Fig. 6 shows a perspective view showing the mounting structure 300 in which the speaker 1 is mounted on the electronic device 3 according to the comparative example. As shown in Fig. 6, the mounting structure 300 according to the comparative example only includes a damping member 6 as a vibration damping member. Since the speaker 1 and the electronic device 3 have configurations similar to those in the first exemplary embodiment, they are denoted by the same reference symbols, and the descriptions thereof will be omitted.

Specifically, the mounting structure 300 of the speaker 1 according to the comparative example includes a speaker 1, a damping member 6 and the like. Further, the damping member 6 is held between the speaker 1 and the housing 31 of the electronic device 3 on which the speaker 1 is mounted.

Further, sound holes 31A that release a sound emitted from the speaker 1 to outside of the electronic device 3 are provided in the housing 3 1.

The damping member 6 is made of a resin material such as urethane or nitrile rubber formed to have a plate-like shape. The damping member 6 according to the comparative example does not include a surface having an uneven part which is processed to have convexes and concaves. In summary, the damping member 6 according to the comparative example has a surface which is formed to have a flat-plate shape.

The speaker frame 12 and the damping member 6 are joined, and the damping member 6 and the housing 31 of the electronic device 3 are joined. The speaker 1 is thus mounted on the electronic device 3.

In the graph shown in Fig. 5, the vertical axis indicates a sound pressure level (dB: decibel) and the horizontal axis indicates a frequency (Hz: hertz). When a sound pressure is represented by p (unit [Pa]), the sound pressure level Lp (unit [dB]) is expressed by the following expression (1).

$$\mathrm{Lp} = 10 \times \log 10 (\mathrm{p}^2/\mathrm{p}_0{}^2) = 20 \times \log 10 (\mathrm{p}/\mathrm{p}_0) \quad \ldots (1)$$

In the expression (1), $p_0$ is a reference value of the sound pressure, and $p_0 = 20 \times 10^{-6}$[Pa] is established.

Further, in Fig. 5, the solid line indicates acoustic characteristics of the electronic device 3 on which the speaker 1 is mounted by means of the mounting structure 100 according to the first exemplary embodiment, and the dashed line indicates acoustic characteristics of the electronic device 3 on which the speaker 1 is mounted by means of the mounting structure 300 according to the comparative example.

As shown in Fig. 5, in the electronic device 3 on which the speaker 1 is mounted by means of the mounting structure 100 according to the first exemplary embodiment, the sound pressure level can be greatly reduced at frequencies of around 5000 [Hz] to 10000 [Hz] compared to the electronic device 3 on which the speaker 1 is mounted by means of the mounting structure 300 according to the comparative example. In summary, by mounting the speaker 1 on the electronic device 3 by means of the mounting structure 100 according to the first exemplary embodiment, the acoustic characteristics of the electronic device 3 can be greatly improved compared to those of the conventional techniques.

Note that the present invention is not limited to the above exemplary embodiments and may be changed as appropriate without departing from the spirit of the present invention. The planar cross-sectional shape of each concave part and each convex part, the depth of each concave part (height of each convex part), and the density of each concave part (density of each convex part) of the first uneven part 21A and the second uneven part 22A in the mounting structure 100 and the first uneven part 41A and the second uneven part 5A in the mounting structure 200 can be adjusted as appropriate, for example, depending on the materials or the like of the metallic member 21, the speaker frames 12 and 41, and the damping members 22 and 5, thereby making it possible to obtain a desired damping performance and acoustic characteristics.

While the present invention has been described with reference to the exemplary embodiments, the present invention is not limited to the exemplary embodiments described above. Various changes that can be understood by one of ordinary skilled in the art may be made in the configurations and the details of the present invention within the scope of the present invention.

This application is based upon and claims the benefit of priority from Japanese Patent Application No. 2012-145378, filed on June 28, 2012, the disclosure of which is incorporated herein in its entirety by reference.

**Reference Signs List**

| | |
|---|---|
| 1 | SPEAKER FRAME (ELECTROACOUSTIC TRANSDUCER) |
| 11 | PERMANENT MAGNET |
| 12 | SPEAKER FRAME (HOUSING OF ELECTROACOUSTIC TRANSDUCER) |
| 2 | VIBRATION DAMPING MEMBER |
| 21 | METALLIC MEMBER |
| 21A | FIRST UNEVEN PART |
| 22 | DAMPING MEMBER |
| 22A | SECOND UNEVEN PART |
| 3 | ELECTRONIC DEVICE (MOUNTING DEVICE) |
| 31 | HOUSING (HOUSING OF MOUNTING DEVICE) |
| 4 | SPEAKER (ELECTROACOUSTIC TRANSDUCER) |
| 41 | SPEAKER FRAME (HOUSING OF ELECTROACOUSTIC TRANSDUCER) |
| 41A | FIRST UNEVEN PART |
| 5 | DAMPING MEMBER |
| 5A | SECOND UNEVEN PART |
| 100, 200 | MOUNTING STRUCTURES |

**Claims**

1.  A mounting structure in which an electroacoustic transducer is mounted comprising:

    an electroacoustic transducer; and
    a damping member held between the electroacoustic transducer and a mounting device on which the electroacoustic transducer is mounted, wherein
    a surface of a housing of the electroacoustic transducer on a side of the mounting device comprises a first uneven part, at least a part of the first uneven part being processed to have convexes and concaves, and
    a surface of the damping member on a side of the electroacoustic transducer comprises a second uneven part, at least a part of the second uneven part being processed to have convexes and concaves to fit the first uneven part of the housing of the electroacoustic transducer.

2.  The mounting structure in which the electroacoustic transducer is mounted according to Claim 1, wherein an elastic coefficient of the damping member is equal to or less than 1/100 of an elastic coefficient of the housing of the electroacoustic transducer.

3.  A mounting structure in which an electroacoustic transducer is mounted comprising:

    an electroacoustic transducer; and
    a vibration damping member held between the acoustic transducer and a mounting device on which the electroacoustic transducer is mounted, wherein
    the vibration damping member comprises a metallic member arranged on a side of the electroacoustic transducer and a damping member arranged on a side of the mounting device,
    a surface of the metallic member on a side of the mounting device comprises a first uneven part, at least a part of the first uneven part being processed to have convexes and concaves, and
    a surface of the damping member on a side of the electroacoustic transducer comprises a second uneven part, a part of the second uneven part being processed to have convexes and concaves to fit the first uneven part of the metallic member.

4.  The mounting structure in which the electroacoustic transducer is mounted according to Claim 3, wherein an elastic coefficient of the damping member is equal to or less than 1/100 of an elastic coefficient of the metallic member.

5.  An electronic device on which the electroacoustic transducer is mounted by means of the mounting structure according to any one of Claims 1 to 4.

Fig. 1

100

22A

22
21
} 2

21A

12
11
} 1

Fig. 2

100

3

31

22A

22
21
} 2

21A

12
11
} 1

Fig. 3

_200_

Fig. 4

_200_

Fig. 5

Fig. 6

## INTERNATIONAL SEARCH REPORT

| | International application No. |
|---|---|
| | PCT/JP2012/008295 |

A. CLASSIFICATION OF SUBJECT MATTER
*H04R1/02*(2006.01)i, *H04M1/03*(2006.01)i

According to International Patent Classification (IPC) or to both national classification and IPC

B. FIELDS SEARCHED

Minimum documentation searched (classification system followed by classification symbols)
H04R1/02, H04M1/03

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 07-336576 A (Sony Corp.), 22 December 1995 (22.12.1995), entire text; all drawings (Family: none) | 1-5 |
| Y | JP 2002-067217 A (Hitachi Zosen Corp.), 05 March 2002 (05.03.2002), entire text; all drawings (Family: none) | 1-5 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 25 March, 2013 (25.03.13) | 09 April, 2013 (09.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 2195800 A
- JP 2226900 A
- JP 3047750 A
- JP 5000552 A
- JP 2012145378 A